# EUROPEAN PATENT SPECIFICATION

(11) **EP 3 002 160 B1**
(45) Date of publication and mention of the grant of the patent: **08.08.2018**
(21) Application number: 14187090.7
(22) Date of filing: 30.09.2014
(51) Int. Cl.: B60R 25/021

(54) **An antitheft device for the steering column of a vehicle**
Diebstahlschutzvorrichtung für die Lenksäule eines Fahrzeugs
Dispositif antivol pour colonne de direction d'un véhicule

(43) Date of publication of application: 06.04.2016
(73) Proprietor: U-Shin Deutschland Zugangssysteme GmbH, 85253 Erdweg (DE)
(72) Inventor: Linder, Anton, 85253 Erdweg (DE)
(74) Representative: Gaillarde, Frédéric F. Ch.

(56) References cited:
- EP-A1- 0 071 803
- EP-A1- 1 359 069
- WO-A1-2012/028324
- WO-A1-2013/029907
- DE-A1- 1 810 590
- DE-A1-102008 031 217

## Description

The present invention relates to an antitheft device for the steering column of a vehicle.

Such devices, which generally comprise the vehicle's ignition key lock, have the function of blocking movement of the column when such movement is not authorized, in particular when the vehicle's ignition key is not present.

They frequently have a superlocking function, the purpose of which is to maintain blocking of the column even if a criminal has broken the part of the device with the lock cylinder.

This function of superlocking is triggered by a mobile rod and a superlocking pin urged by a spring against the part of the device bearing the lock cylinder or by direct attachment of the rod to a part bearing the lock cylinder.

This rod must extend from a zone close to the lock as far as a zone close to a superlocking pin.

During an attack, the thief tries to remove violently the lock cylinder.

The rod attached to the lock cylinder and to the pin is then removed and the pin moves so that blocking the lock bolt in the lock position.

However, in some cases, it is possible to immobilize the pin or the rod. In this configuration, the lock cylinder can be removed and the cam can be rotates for unlocking the locking bolt without activating the superlocking function.

Therefore, it is possible to unlock the steering column without activating the superlocking system.

The document WO 2013/029907 A1 discloses an example of an antitheft device in the prior art for a steering column of a vehicle.

One object of the invention is to provide an antitheft device for steering column lock which prevents such drawbacks and which is more reliable and efficient.

The invention relates to an antitheft device according to claim 1.

Thanks to the invention, when the rod is deformed, this latter locks the rotation of the cam even after a violent removing of the lock cylinder. Therefore, even if the environment of the control member is immobilized, the control member blocks the rotation of the cam after an attack on the steering column lock by hits made on the housing.

The device according to the invention is then more reliable and efficient than the one of the state of art.

The device according to the invention may additionally display at least any one of the features of any claims 2 to 6 taken alone or in any combination.

It is also proposed a motor vehicle comprising an antitheft device according to the invention.

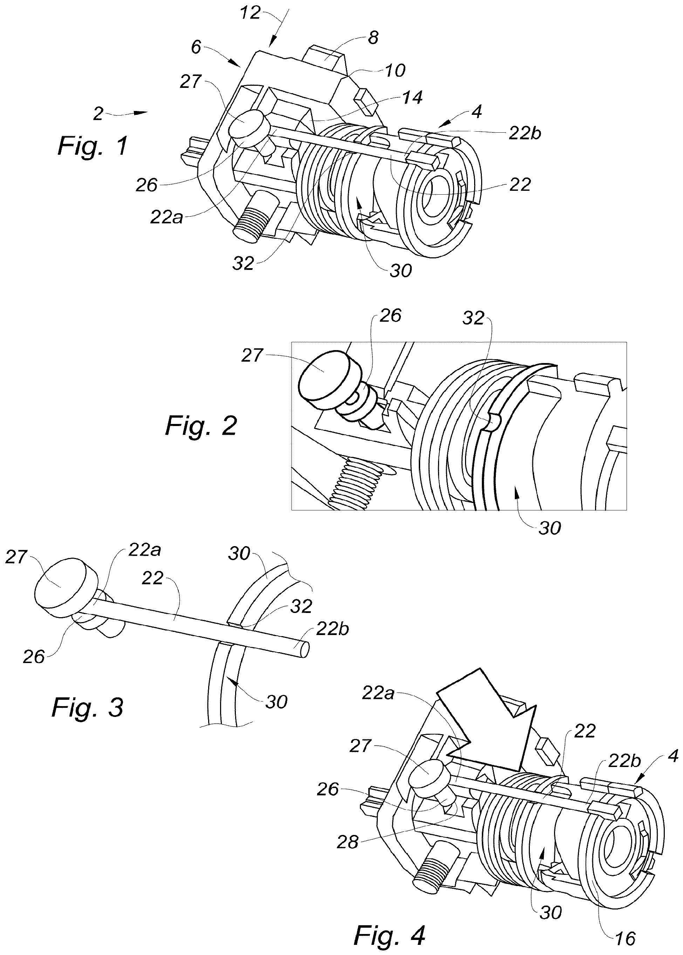

A non-limiting embodiment of the invention will now be described with reference to the accompanying drawings, in which figures 1 to 4 are three-dimensional views of an embodiment of a antitheft device for the steering column lock according to an embodiment of the invention. Specifically, figure 2 is a three-dimensional view of the embodiment according to figure 1 without the control member. Figure 3 is a three-dimensional schematic view of the deformation control member of the antitheft device of figure 1 due to an attack and Figure 4 is a three-dimensional view of the embodiment according to figure 1 with an hit applied to the antitheft device.

This device 2 comprises, in the case in point, two main parts which we will here respectively call the access part 4 and the blocking part 6. The access part 4 in particular comprises a lock cylinder or similar device intended to receive an insert of a key. When the driver of the vehicle introduces the insert into the lock cylinder, he may set a rotor of the latter turning so as to switch on the vehicle and set it in operation.

The blocking part 6 comprises in particular a bolt 8 visible in figure 1 and having the general shape of a right parallelepiped. It is mounted so as to slide in a bolt guide 10 of the part 6. Sliding takes place in a longitudinal direction 12 of the bolt. When in the extended position, the bolt, by means of its distal end 14, engages with a vehicle steering column element to block rotation of the latter around its axis of rotation.

Actuating the lock using the key makes it possible to control the position of the bolt and therefore blocking or unblocking of the steering column. For more details in this respect, reference is made in particular to application in the name of the applicant.

The device 2 comprises a housing (not represented) comprising the access part 4 and the blocking part 6. It is also possible that the housing comprises a junction point between the access part 4 and blocking part 6, a weakened or breaking zone embodied by a local reduction in the thickness of the housing wall. This zone may be positioned such that, if a load is exerted on the access part 4, it is capable of causing breakage of the housing and of the device by separation of the access part 4 and the blocking part 6.

The blocking part 6 comprises a control member 22, for example in the form of a rod, form which can be mobile. The control member may have a circular or a rectangular cross section.

According to the embodiment shown in the figures, the blocking part 6 comprises a control member as a mobile rod 22. The rod 22 is made in a material allowing a deformation of the rod when a force is exerted on the said rod.

In case of a mobile element 22, the latter may be in the form of a slide such as a gauge rod 22 or needle. The gauge rod 22 may be mounted so as to move in a sliding manner in the housing.

The rod 22 assumes the general form of a rigid rectilinear element extending in the case in point perpendicular to the direction 12.

The control member 22 extends so as to connect the access part 4 to the blocking part 6 such that the separation between the access part 4 and the blocking part 6 results in displacement of the control member 22 in the blocking part 6.

The rod 22 may be displaced by the separating movement of the access part 4 by an end 22b of rod in contact with to the lock cylinder and driven by the latter in this case.

The blocking part 6 comprises a pin 26 mounted in a mobile manner in a channel 28 and held in position at one end of this channel by a cover 27 of the said pin held in position by the other end 22a of the rod. The cover 27 may belong to the housing.

According to the invention, a cam 30 is disposed between the lock cylinder and the lock bolt and is driven by the rotor of the lock cylinder. The said cam 30 comprises at its periphery at least a cavity 32 disposed for receiving the rod 22 in case of deformation of this latter. The cam 30 may have a plurality of cavities.

Therefore, if violent hits are given to the housing, for example according to the direction shown by the red arrow of figure 4, the rod 22 is deformed and then received in the cavity 32. The cam is then simply and reliably blocked and cannot rotate any more.

Since the control member is definitely blocked in a cavity thanks to the deformation of the control member, even if the lock cylinder is removed from the steering column lock, the cam is block by the said control member and cannot rotate anymore. The lock bolt remains then locked.

The device according to the invention is then more reliable and efficient than the one of the state of art.

## Claims

1. An antitheft device for the steering column of a vehicle, comprising:
- a blocking part (6) comprising a bolt (8) for blocking the steering column, and a control member (22) capable of controlling blocking in position of the bolt; and
- an access part (4) comprising a cam (30) cooperating with the bolt (8);
**characterised in that** the cam (30) comprises at the periphery at least a cavity (32) disposed for receiving the control member (22) when the latter is deformed.

2. The device as claimed in claim 1, which comprises a superlocking element (26) is blocked by an end (22a) of the control member (22), the said superlocking element (26) being intended to block the locking bolt (8) in the locking position in case the rod (22) is removed.

3. The device as claimed in any one of the preceding claims, wherein the cam(30) comprises a plurality of cavities (32) disposed at the periphery.

4. The device as claimed in any one of the preceding claims, wherein the control member (22) is a rod, sliding or not, in contact with the lock cylinder and with the retaining element (26), the rod being configured for being deformable in order to be received in the cavity (32).

5. The device as claimed in the claim 4, wherein the retaining element (26) is a sliding pin.

6. A vehicle, **characterized in that** it comprises a device (2) as claimed in any one of the preceding claims.

## Patentansprüche

1. Diebstahlschutzvorrichtung für die Lenksäule eines Fahrzeugs, umfassend:
- ein Sperrteil (6), einen Bolzen (8) zum Sperren der Lenksäule umfassend und ein Steuerglied (22), das imstande ist, das Sperren in Position des Bolzens zu steuern; und
- ein Zugriffsteil (4), einen Nocken (30) umfassend, der mit dem Bolzen (8) zusammenwirkt;
**dadurch gekennzeichnet, dass** der Nocken (30) am Umfang mindestens einen Hohlraum (32) umfasst, der zur Aufnahme des Steuerglieds (22) angeordnet ist, wenn letzteres verformt ist.

2. Vorrichtung nach Anspruch 1, die ein Totalverriegelungselement (26) umfasst, das durch ein Ende (22a) des Steuerglieds (22) gesperrt ist, wobei das Totalverriegelungselement (26) dazu bestimmt ist, den Riegelbolzen (8) in der Riegelposition für den Fall zu sperren, dass die Stange (22) entfernt wird.

3. Vorrichtung nach einem der vorstehenden Ansprüche, wobei der Nocken (30) eine Vielzahl von Hohlräumen (32) umfasst, die am Umfang angeordnet sind.

4. Vorrichtung nach einem der vorstehenden Ansprüche, wobei das Steuerglied (22) eine gleitende oder nicht gleitende Stange in Kontakt mit dem Riegelzylinder und mit dem Rückhalteelement (26) ist, wobei die Stange konfiguriert ist, um verformbar zu sein, um in dem Hohlraum (32) aufgenommen zu werden.

5. Vorrichtung nach Anspruch 4, wobei das Rückhalteelement (26) ein Gleitzapfen ist.

6. Fahrzeug, **dadurch gekennzeichnet, dass** es eine Vorrichtung (2) nach einem der vorstehenden Ansprüche umfasst.

## Revendications

1. Dispositif antivol pour la colonne de direction d'un véhicule, comprenant :
- une partie de blocage (6) comprenant un boulon (8) pour bloquer la colonne de direction, et un élément de commande (22) capable de commander le blocage en position du boulon ; et
- une partie d'accès (4) comprenant une came (30) coopérant avec le boulon (8) ;
**caractérisé en ce que** la came (30) comprend à la périphérie au moins une cavité (32) disposée pour recevoir l'élément de commande (22) lorsque ce dernier est déformé.

2. Dispositif tel que revendiqué dans la revendication 1, qui comprend un élément de super-verrouillage (26) qui est bloqué par une extrémité (22a) de l'élément de commande (22), ledit élément de super-verrouillage (26) étant destiné à bloquer le boulon de verrouillage (8) dans la position de verrouillage dans le cas où la tige (22) est retirée.

3. Dispositif tel que revendiqué dans l'une quelconque des revendications précédentes, dans lequel la came (30) comprend une pluralité de cavités (32) disposées à la périphérie.

4. Dispositif tel que revendiqué dans l'une quelconque des revendications précédentes, dans lequel l'élément de commande (22) est une tige, coulissante ou non, en contact avec le cylindre de verrou et avec l'élément de retenue (26), la tige étant configurée pour être déformable afin d'être reçue dans la cavité (32).

5. Dispositif tel que revendiqué dans la revendication 4, dans lequel l'élément de retenue (26) est une broche coulissante.

6. Véhicule, **caractérisé en ce qu'**il comprend un dispositif (2) tel que revendiqué dans l'une quelconque des revendications précédentes.
